Europäisches Patentamt

(19) European Patent Office

Office européen des brevets

(11) Publication number: **0 056 026**
**B1**

(12) **EUROPEAN PATENT SPECIFICATION**

(45) Date of publication of patent specification: **08.07.87**

(51) Int. Cl.⁴: **F 16 D 1/06, F 16 B 21/18**

(21) Application number: **81901030.7**

(22) Date of filing: **12.11.80**

(86) International application number:
**PCT/DK80/00069**

(87) International publication number:
**WO 82/00325 04.02.82 Gazette 82/04**

(54) **A FIXING MEMBER ADAPTED TO BE CLAMPED ON A SHAFTLIKE ELEMENT.**

<table>
<tr><td>

(30) Priority: **24.07.80 DK 3185/80**

(43) Date of publication of application:
**21.07.82 Bulletin 82/29**

(45) Publication of the grant of the patent:
**08.07.87 Bulletin 87/28**

(84) Designated Contracting States:
**FR**

(56) References cited:
**DE-A-2 156 898**
**DE-B-1 005 324**
**DE-B-1 008 537**
**DE-B-1 111 885**
**GB-A- 664 218**
**US-A-2 798 748**
**US-A-2 989 327**

</td><td>

(73) Proprietor: **MARTINS, Börge**
**B. Juhl, 7**
**Ringtoften DK-2740 Skovlunde (DK)**

(72) Inventor: **MARTINS, Börge**
**B. Juhl, 7**
**Ringtoften DK-2740 Skovlunde (DK)**

(74) Representative: **Madeuf, René Louis et al**
**Cabinet Madeuf 3, Avenue Bugeaud**
**F-75116 Paris (FR)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a fixing member as defined in the preamble of claim 1.

Such fixing members are known for example from GB—A—670.392 dealing with V-belt pulleys made from plate material and provided with a middle part formed as a fixing member of the kind referred to. From said patent specification a similar fixing member is also known which is adapted to cooperate with a V-belt pulley part shaped like such a fixing member.

Such fixing members have the great advantage that they can in a simple manner be stamped from sheet metal. Furthermore, such a fixing member may easily be clamped on a shaft since the clamping means may be bolts which through holes in the fixing member are screwed into the counter member which for example may be a corresponding fixing member provided with threaded holes, or which extend into a fixing member arranged on the other side thereof. Further it has proved that provided a small tolerance between the centre opening of the fixing member and the shaft exists, then owing to the contraction the centre opening due to the flattening of the fixing member obtained by the compression thereof the centre opening may be narrowed to such a degree that the fixing member clamps tightly about the shaft. This attachment may be procured easy and readily and results in such a firm clamping that considerable torques can be transmitted. Thus, it is even possible to use pulleys formed with such fixing members as drive pulleys for eccentric presses which during each stroke work with torques varying within wide limits and, therefore, demanding an effective clamping effect.

For such a connection it is necessary, however, to use such small tolerances that in practice it can not be complied with by mass production of shafts and fixing members, and, consequently, in practice it has proved that generally said known fixing members, can be used only in such cases where compared with the diameter of the shaft only relatively small torques have to be transmitted. Therefore, today such fixing members are only infrequently used.

The object of this invention is to provide a fixing member of the type dealt with, that after having been clamped onto a shaft or another shaftlike element without particular fine tolerances being necessary is able to transfer to or from this element much larger torques than it is possible by the above said known fixing members even when working with very fine tolerances, and where this may be obtained without losing the ability of manufacturing the fixing members by stamping or in any other cheap manner, and simultaneously providing an essential increase in the fields of application of the fixing member.

According to the invention this is achieved by the means appearing from the characterizing clause of claim 1.

Due to the greater flexibility of the inner portions of the fixing member, owing to the folds, the flattening of its main portion is obtained by a compression thereof in a direction perpendicular to the plane of the abutting surface which results substantially in a contraction of the centre opening and, thereby, in a pressure exerted between the disc inner edge face and the shaftlike element which is substantially greater than that obtained from the above described known fixing members. Besides, the surface of friction between the disc inner edge and the shaftlike element is essentially increased, often more than doubled, owing to the zigzag or wave shape of the inner edge, and, therefore, a further essential increase of the forces of friction between the fixing member and the shaftlike element is obtained. This advantage can be further improved in as much as the features of the invention also makes it possible to use thicker material than for the known fixing members. Finally the side edges of the inner edge face of the disc are inclined relative to the direction in which an applied torque attempts to rotate the fixing member on the shaft. Together all these advances permit much coarser tolerances to be used, than has been possible by the known fixing members, for example even by a tolerance of about 0.1 mm, a fixing member according to the invention will be able to transfer between itself and the shaftlike element torques considerably greater than those obtainable by the above described known fixing members, without much greater manufacturing costs. Furthermore an extension of the fields of application is obtained. Thus, whereas the known fixing members were applicable only in connection with circular cylindric shafts, a fixing member according to the present invention may be adapted to shafts of any cross-sectional shape, for example oval and polygonal shafts, on which very often it is desired to obtain a firm attachment of an element by means of fixing members.

The fixing member may further suitable be formed as recited in claim 2, since it has been shown that especially high radially inwardly directed clamping forces may be obtained thereby.

In case, as this is already partially known from the prior art, the fixing member is shaped as recited in the preamble of claim 3. Further the shape of the fixing member may be as recited in the characterizing clause of claim 3, whereby it has been shown that it is possible even by the use of thick sheet metal to ensure a considerable radial contraction of the centre opening and, thereby, to obtain the greatest possible contact pressure between the fixing member and the shaftlike element. In this case it is most advantageous if besides the shape is conforming to that recited, in claim 4, whereby the weakening of the main portion due to the openings will be as small as possible.

In case the fixing member is shaped as recited in the preamble of claim 5, advantageously it may further be shaped as recited in the characterizing clause of claim 5 whereby, a flattening of the main portion does not only result in a contraction of the centre opening but simultaneously in a tendency of radial expansion towards the disc outer edge, that in this case may also be zigzag or wave-like. Therefore, in case the fixing member has its outer edge arranged within a correspondingly dimensioned recess, for example in a rim of a driving member to be attached to a shaft, the fixing member is able not only to be secured with great force to the shaft but also can be clamped with great force to the circumferential wall of the recess, and consequently the fixing member, preferably together with a corresponding fixing member arranged at the opposite side of the driving member is able to ensure a firm attachment of the driving member to the shaft without the clamping means, most often bolts, necessarily having to serve also as drivers.

A special and large field of application of the fixing member according to the present invention may be obtained, if the same further is shaped as recited in claim 6 since in this case the fixing member may serve as a self-locking nut. If such a fixing member or nut is screwed onto a thread until a contact with another element is obtained, and after a certain contact pressure has been reached, the nut is further rotated, the innermost part of the main portion will be pressed in a direction of that other element and owing to the contraction of the center opening caused thereby the thread of the centre opening will axially as well as radially be forced onto the thread, and the deformations thereof thereby produced will ensure a reliable retaining of the fixing member or nut even in case of vibrations. Although not absolutely necessary advantageously in this case the fixing member may further be shaped as recited in claim 7.

Further the fixing member may be shaped as recited in claim 8, so that it is possible by lining up two or more fixing members to obtain a very large clamping surface between the joint fixing members and a shaftlike element, without it being necessary to manufacture the fixing members from too thick a sheet material and without it being necessary to use too great a force for compressing the fixing member assembly.

Besides the shape may be as recited in claim 9 whereby it is possible to further increase the tendency of the centre opening to contract and, thereby, to increase the clamping forces.

Finally, the shape may be as recited in claim 10 so that also a perceptible expansion of the outer edge of the fixing member can be obtained to ensure the attachment thereof within a recess of another element.

Fig. 1 is a side elevational view of one embodiment of the fixing member of this invention.

Fig. 2 is a sectional view of two fixing members of the kind shown in Fig. 1, arranged on either side of an element adapted to be attached to a shaft,

Fig. 3 is an elevational view of another embodiment of a fixing member of this invention,

Fig. 4 is an axial sectional view of the member shown in Fig. 3 used for clamping to a shaft of a driving member having a middle portion that itself constitutes a fixing member of the kind shown in Fig. 3,

Figs. 5, 6 and 7 are respectively a front elevational view, a side elevational view, and a cross sectional view of a third embodiment of a fixing member of this invention,

Figs. 8 and 9 are respectively a front elevational view and a sectional view of an embodiment of a fixing member of this invention shaped as a self locking nut,

Figs. 10 to 12 are respectively a front elevational view a side elevational view, and a sectional view of another embodiment of the fixing member of this invention,

Figs. 13 and 14 are respectively a front elevational view and a sectional view of an embodiment of two fixing members cooperating as a unit according to this invention,

Figs. 15 and 16 are corresponding views of another embodiment of two fixing members cooperating as a unit according to this invention,

Figs. 17 and 18 are front elevational views of two further embodiments of the fixing member of this invention,

Figs. 19 and 20 are a front elevational view and a sectional view respectively of a fixing member of this invention adapted to serve as a washer, and

Fig. 21 is a sectional view of the fixing member shown in Figs. 19 and 20 arranged on a bolt.

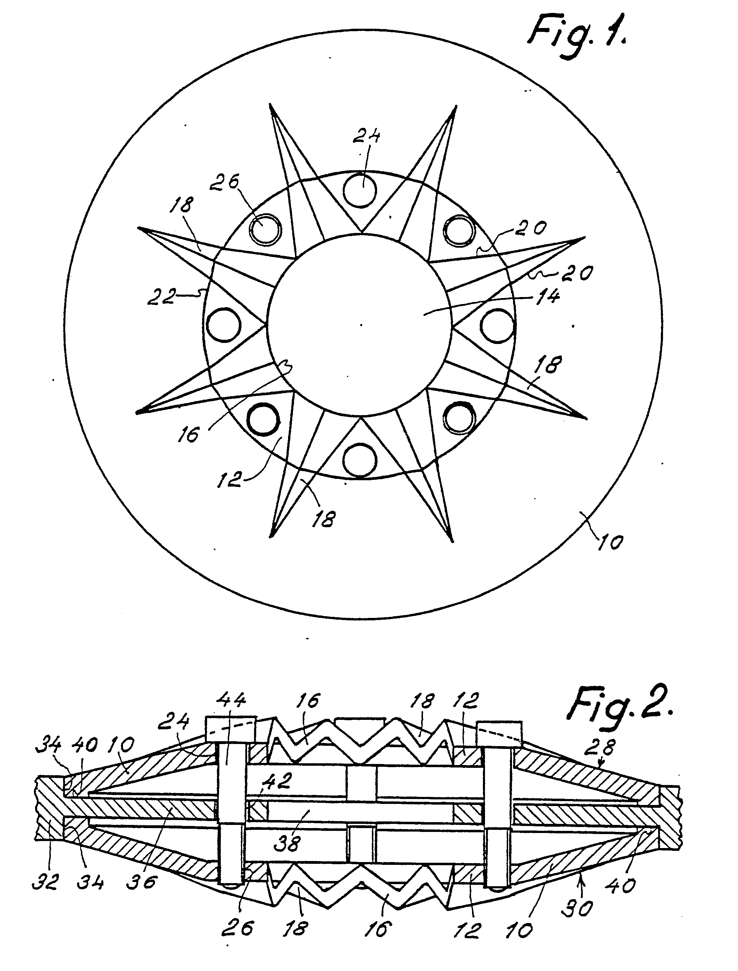

The fixing member shown in Fig. 1 can be stamped from sheet metal, although it may also be made by moulding or by being pressed from a suitably formed blank. The fixing member comprises a main portion 10 shaped as a relatively flat truncated cone which inwardly passes into a substantially plane middle portion 12 provided with a centre opening 14 having a diameter which is a sliding fit on or a shaft on which the fixing member 10 is to be clamped. The middle portion 12 is provided with a number, in the present case eight, of angularly equispaced folds 18 radiating from the inner edge 16 of the fixing member and extending radially over the middle portion 12 and over a part of the main portion 10. In the embodiment shown each fold 18 is as shown in Fig. 2, substantially V-shaped in cross section with a decreasing depth and converging side edges 20 in a radial outwards direction. The inner edge face 16 of the middle portion 12 runs in zig-zag fashion, owing to the folds 18, and over its whole axial extend it is a part of the same cylinder surface.

In the embodiment shown, each pair of the eight folds 18 meet at the centre opening 14 but their number may be another and/or their width at the centre opening 14 may vary and at the centre opening each two neighbouring folds may be interconnected by an edge face portion forming a part of a ring. The folds 18 may even have a more rounded cross section resulting in a substantially waveshaped edge face.

The middle portion 12 is provided, between each pair of folds 18 and near its transition 22 with the main portion 10, with a bolt hole 24 or 26 of which every second hole 24 is a plain hole whereas the remaining holes 26 are threaded.

At its rear side the main portion 10 is provided along its circumference with a radially extending abutting surface 40, see Fig. 2.

In Fig. 2 there is shown how two fixing members 28 and 30, both corresponding to the one shown in Fig. 1 but rotated 45° relative to each other, can be used for attaching a pulley 32, of which only the innermost part is shown, to a shaft (not shown). The inner part of the pulley 32 is at each side provided with a recess 34 leaving between them a disc shaped middle part 36 provided with a centre opening 38 having a diameter which is preferably a sliding fit on its corresponding shaft, but may be larger. The two fixing members 28 and 30 are placed in one each of the two recesses 34 with their abutting surfaces 40 contacting the middle part 36. Owing to the mutual angular displacement of the two fixing members 28 and 30 each plain hole 24 in the fixing member 28 is in line with a threaded hole 26 in the fixing member 30, and the pulley middle part 36 is also provided with plain holes 42 in line with the holes 26. Therefore, an Allen screw 44 or a corresponding bolt inserted in each one of the plain holes 24 of the fixing member 28 and extending through the corresponding hole 42 in the pulley part 36 can be screwed into the corresponding threaded hole 26 in the fixing member 30, see Fig. 2.

Provided the bolts 44 are only screwed just so far into the threaded holes 26 that the members 28, 30 and 32 are kept together, the pulley 32 may together with the fixing members 28 and 30 be pushed onto a corresponding shaft. When the pulley 32 takes up its proper position on the shaft, the bolts 44 are tightened whereby the middle portions 12 of the two fixing members 28 and 30 are urged towards each other, the pressure being applied near the inner border 22 of each main portion 10. The main portion 10 of each fixing members 28 and 30 thereby attempts to flatten and cause a radial contraction of the transition 22 and also of the middle portion 12, whereby the diameter of the centre opening 14 is diminished. This causes the fixing members 28 and 30 to clamp the shaft and, thereby, to become fixed thereto. Said contraction of the middle portion 12 is facilitated owing to the folds 18 which are also to some degree compressed in their transverse direction, and, therefore, by tightening of the bolts 44, there is obtained not only the desired contraction of the centre opening 14 but also, that the edge faces 16 of the folds will exert a very high pressure against the shaft. Since further the contact face between the inner edge face 16 of the disc and the shaft is relatively large owing to the zig-zag shape of the edge face 16, even a slight tightening of the bolts 44 has the result that, between the fixing members 28 and 30 and the shaft, and consequently between the pulley 32 and the shaft, rather high torques can be transmitted and the higher torques the stronger the bolts 44 are tightened. Even the fact that owing to its zigzag shape the disc inner edge face 16 includes edges extending obliquely to radial planes through the shaft contribute to the prevention of movement between the shaft and the inner edge face 16 and thereby to an increase of the torque that can be transmitted.

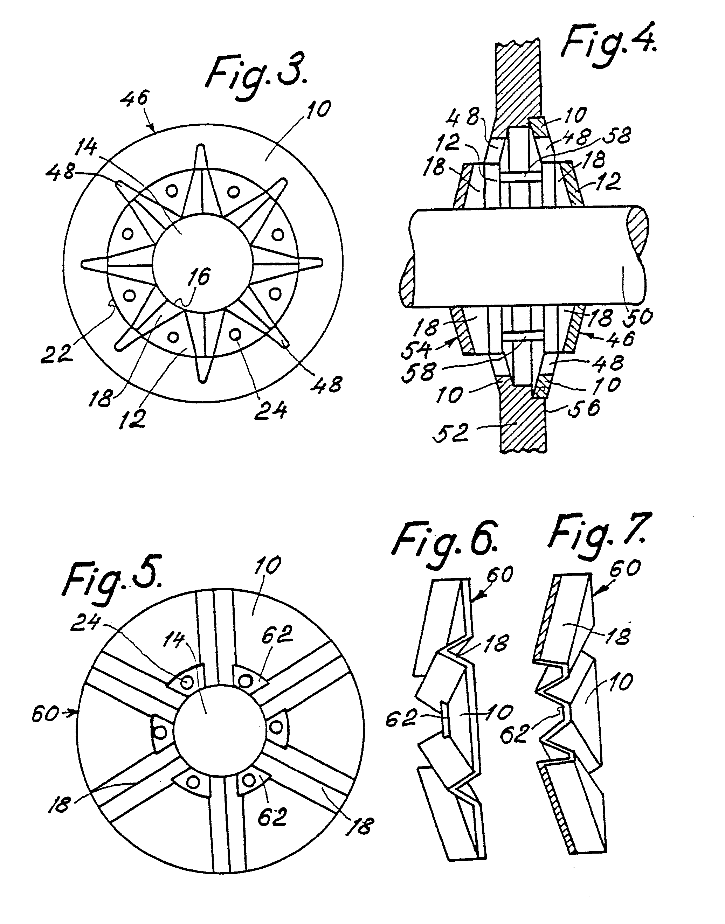

In Fig. 3, a fixing member 46 is shown which differs from the one shown in Fig. 1 by the folds 18 extending over the middle portion 12 only whereas the main portion 10 opposite to each fold 18 is provided with an opening 48. These openings 48 facilitate the flattening of the main portion 10 as compared with the extensions shown in Fig. 1 of the folds 18 over a part of the main portion 10. The embodiment shown in Fig. 3 is of importance mainly in connection with fixing members for small shaft diameters.

In Fig. 4 is shown how a fixing member 46 of the kind shown in Fig. 3 may be utilized for securing to a shaft 50 an element 52 having a middle part 54 shaped as a fixing member corresponding to the fixing member 46, that engages a recess 56 formed in the element 52 opposite to the middle part 54. The latter and the fixing member 46 are urged towards each other by means of bolts 58 extending through plain holes 24 in the fixing member 46 between its folds 18 and screwed into corresponding threaded holes in the middle part 54. Although the fixing member 46 shown is provided with eight holes 24 only four threaded holes in the middle part 54 of the element 52 are necessary.

Figs. 5 to 7 show a fixing member 60 comprising a main portion 10 extending between the outer circumference and the centre opening 14 of the member. The folds 18 extend over the whole width of the main portion 10 and have the same cross sectional shape over their whole length. The main portion 10 is provided near the centre opening 14 and between the folds 18 with thickenings 62 providing forwardly extending contact faces for heads of and/or nuts for bolts or screws to be inserted in plain and/or threaded holes 24 and serving as clamping means. This embodiment has the advantage that when flattened the main portion 10 will not only cause a contraction of its centre opening 14 but also in the same degree will cause an expansion of its circumference, so that such a fixing member or preferably two or more together is especially suited for fastening on a shaft of an element provided with a hub having a through centre bore of a diameter larger than the shaft diameter. Thus, for example, at each end of said hub bore two cooperating fixing members 60 may be arranged. Thereby a fastening of the element to the shaft may be obtained just as effective as that obtainable by the generally used compressible conical spacer bushings. It has to be observed that the thickenings 62 may be substituted by washers provided with a conical oblique underside.

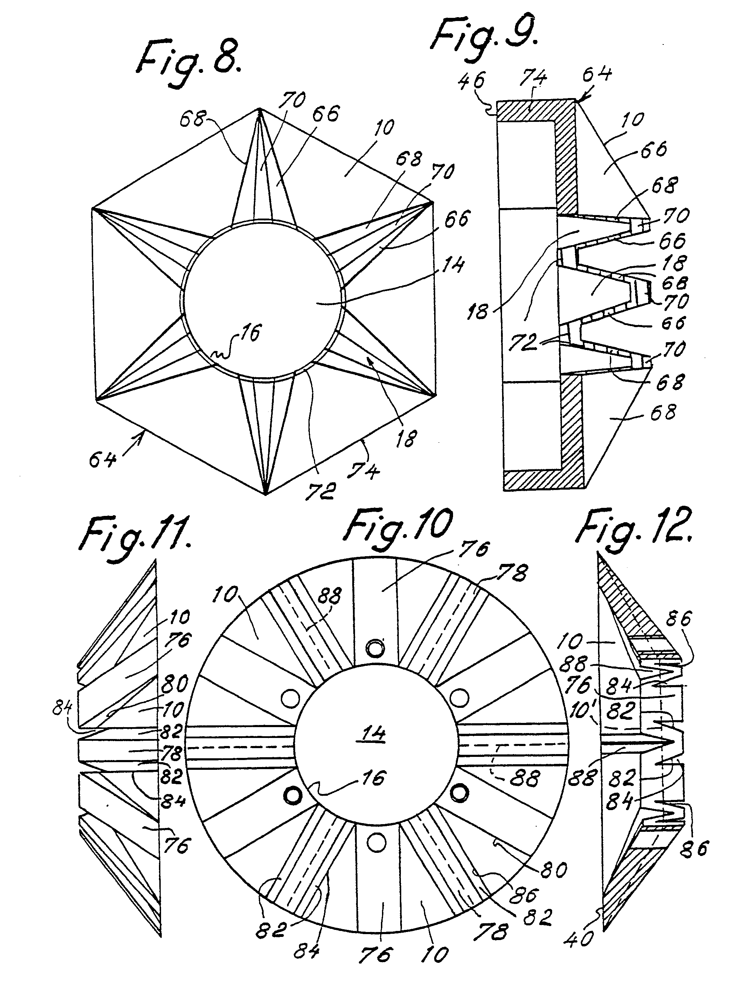

Figs. 8 and 9 show a fixing member of this invention formed as a self-locking nut 64. Also in this case the conical main portion 10, extends from the centre opening 14 to the circumference of the member. This circumference is polygonal, namely hexagonal as is the case with most nuts, but it may also be circular, for example if the nut has to be operated by hand.

In distinction from the embodiments described above, in which the folds 18 are pressed forwards from the main portion 10 and have approximately V-shaped cross sections more or less rounded at the bottom, the nut 64 shown in Figs. 8 and 9 is provided with folds 18 pressed backwards from the main portion 10 and limited by slanting side walls 66 and 68 mutually interconnected by an outer wall 70, so that the cross sections are approximately U-shaped although with slanting sides and a relatively sharp transition between the latter and the bottom of the U. The side walls 64 of each fold 18 converge radially outwards and have in the same direction decreasing width, so that all three walls 66, 68 and 70 converge into an apex at a corner of the polygon. Further, at the centre opening 14 each fold 18 is spaced from its neighbour. This shape results in the formation at the centre opening 14 of a relative long face area well suited to be provided with a thread 72.

The nut 64 has on its rear side, shown to the left in Fig. 9, an axially extending outer wall 74 following the outer periphery of the nut and thus also being hexagonal at the outside even if its inside follows a circular cylinder face. The free end face of the wall 74 constitutes the radial abutting surface 46 of the nut or fixing member 60.

Such a nut 64 can be screwed for example by means of a spanner onto a threaded member, for example a threaded shaft or bolt end, and will work as a normal nut until the abutting surface 46 contacts a face on the element to be fastened by means of the nut. When the nut is turned further, owing to its threading and its mesh with an outer thread, the inner edge 16 of the main portion 10 will be urged axially towards the contact face 46 whereby the main portion 10 will be somewhat flattened and the diameter of its centre opening reduced. Since the main portion 10 opposes the flattening, a large axial pressure will be provided between the threads 72 of the nut and the threads of the member on which the nut is screwed and simultaneously the thread 72 will be pressed radially inwards with a great pressure so that a great radial pressure is provided between the threads of the two members resulting in deformation of the threads to lock the same together. Such a nut which by mass production ma be formed in the same way as normal nuts, has shown to be cheaper in manufacture and more effective than hitherto known self-locking nuts.

Also in the embodiment shown in Figs. 10 to 12 the main portion 10 extends from the centre opening 14 until the outer periphery of the member, but this embodiment may also be adapted to fixing members having a flat middle portion. The front side of the main portion 10 is provided with an even number of ribs 76 and 78 of which every second 76 has a substantially rectangular cross section and is wedge shaped in its longitudinal direction so that it has its greatest height at the centre opening 14. Thus, the side walls 80 of the ribs 76 are substantially perpendicular to the main portion 10 although they may also form an angle therewith. The further ribs 78 have substantially trapezoidal cross sections being widest at the bottom and are also substantially wedge shaped in their longitudinal direction. Their slanting side walls 82 extending downwardly below the upper side of the main portion 10, the theoretical course 10' of which is shown by dotted lines in Fig. 12, so that on both sides of each rib 78 there is provided a substantially V-shaped groove 84, the wall 86 of which opposite to the wall 82 is perpendicular to the upper side of the main portion 10 and the bottom of which is situated lower than said upper side 10'. Each rib 78 is provided at its lower side with a V-shaped groove 88 that bottom of which is situated higher than the upper side 10' of the main portion 10. Thus, each rib 78 forms a fold and permits that by an axial compression of the fixing member the inner edge 16 of the main portion 10 is forcibly pressed inwards. The ribs 76 result in a large contact or friction area between the fixing member and the shaft or the like receiving the fixing member.

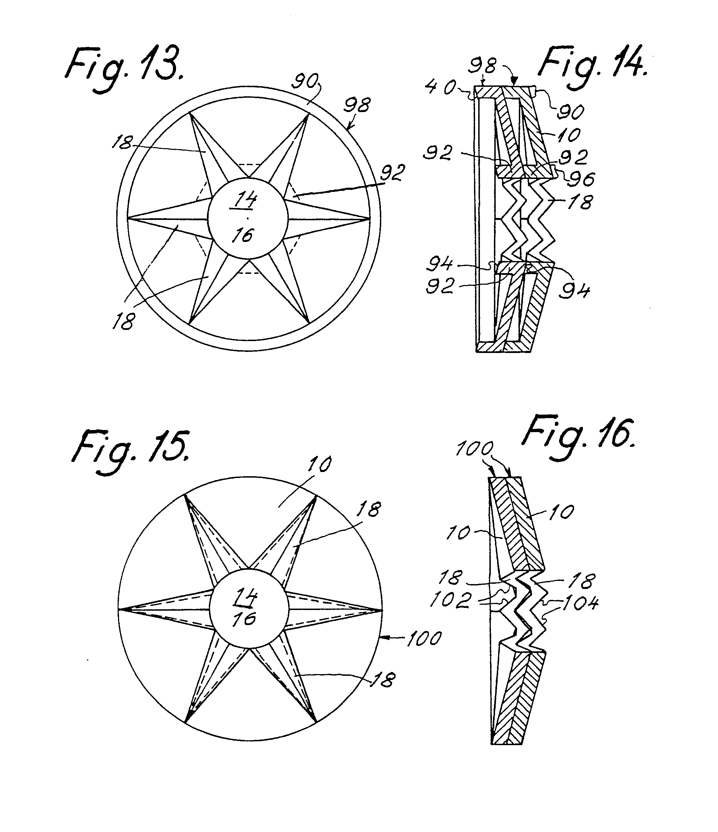

In each of the two fixing members 98 shown in Figs. 13 and 14, the abutting surface 40 conforms with the outermost zone 90 of the main portion 10. Thus each abutting surface 40 forms a part of a truncated cone corresponding to that followed by the upper side of the main portion 10, but the abutting surface 40 as well as the outer zone 90 may be situated in radial planes. Further each fixing member 98 is provided with projections 92 near the edge 16 of the centre opening 14 and between for example three pairs of neighbouring folds 18 at its rear side the projections 92 being of such a length that their free end faces 94 contact the innermost part of the main portion 10 of a like fixing member arranged behind it, coaxially thereto, and with mutually parallel folds 18, as shown in Fig. 14. Consequently the two fixing members 98 forms a unit, and when the rear one of the two fixing members 98 has its abutting surface 40 contacting an abutment face, an axial pressure on the foremost fixing member 98 near its centre opening 14 results in a uniform compression and flattening of both two fixing members 98. The two (or more) fixing members will therefore act as a single fixing member having a contact or friction face cooperating with a matching shaft like element twice as big as that of the individual fixing members, whereas the two fixing members 98 will demand a small axial pressure for developing a given flattening as compared with a single fixing member of double thickness.

It has to be noted that, the faces 94 and 96 can be situated in radial planes, and that the embodiment shown may be adapted to such fixing members which besides the main portion 10 also comprises a flatter middle portion.

In Figs. 15 and 16 there is shown another unit comprising two fixing members 100 which, when arranged in front of each other, can provide a large area of friction between the fixing members and a shaft-like element by use of a compression pressure which, compared with the total area of friction obtained, is relatively small.

Each fixing member 100 comprises only a main portion 10 with folds 18 but a corresponding unit may comprise fixing members which besides the main portion 10 has a flatter, preferably plain middle portion corresponding to the middle portion 12 shown in Figs. 1 and 2. In the embodiment shown in Figs. 15 and 16 the folds 18 are so shaped that the angle between their rear faces 102 is less than the angle between their front faces 104 so that the folds 18 do not prevent a close contact between the main portions 10 and cannot prevent the pressing together of the folds by flattening of the fixing members 100.

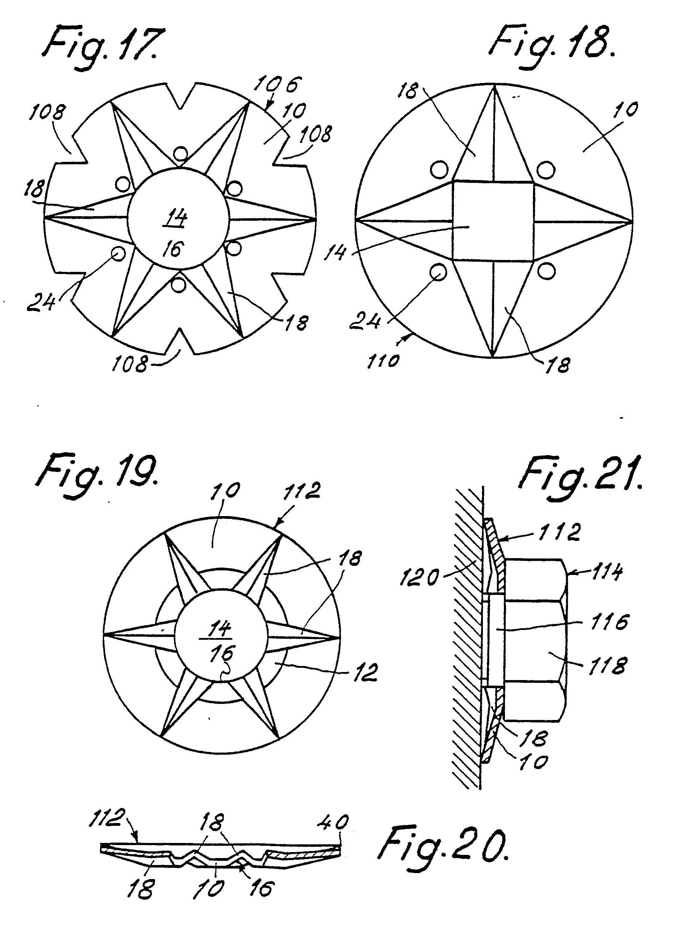

Fig. 17 shows a fixing member 106 in which the main portion 10 is provided at its outer edge with notches 108 ensuring that an axial compression of the members besides a contraction of its centre opening 14 provides expansion of its outer edge. Preferably two pairs of such fixing members 106, in each pair facing in opposite directions, are well suited for procuring a firm connection between a shaft and a pipe like member surrounding the shaft when pairs of fixing members are inserted in the space between the two elements. This for example makes it possible to procure simple belt pulleys which per se only have to consist of the pulley rim.

Fig. 18 shows how a fixing member 110 of this invention may also be formed to serve for fastening an element to a shaft or journal that is polygonal, in the embodiment shown square.

Finally, Figs. 19 to 21 show a fixing member 112 of this invention adapted to be used as a washer for a bolt head or a nut. This fixing member comprises a main portion 10, a middle portion 12 and backwards stamped folds 18. The edge 16 of the centre opening 14 has a diameter which is a sliding fit on a corresponding bolt 114, Fig. 21. The abutting surface 40 is relatively sharp but may also be somewhat chamfered. The washer 112 is placed round the bolt shank 116 and by tightening the bolt by means of its nut shaped head 118 the washer will be fixed between the inner side of the bolt head and the outer side of the element 120 to be fastened to another element, not shown, by means of the bolt 114. By the fixing of the washer 112, the same is compressed so that its inner diameter is diminished and thereby the washer is clamped to the bolt shank 116 simultaneously with the washer 112 being pressed strongly against the outer side of the element 120 to counteract turning of the washer. Thus, such a washer provides good security against loosening of the bolt as compared with hitherto known lock washers, even spring washers.

The washer 112 can also be inserted around the threaded part of a bolt between a nut and an element and will by such a use provide the further security that it is clamped to the bolt and cannot turn relative thereto.

As appears from what is stated above a fixing member of this invention can be embodied in many different manners, partly depending on its field of application, and even in several manners other than the examples appearing from the drawings and explained above. Further, above is only described some few of the many fields of application of a fixing member of this invention.

Especially it has to be noted that even if in most cases bolts are used as clamping means for compression of the fixing member many other clamping means may be used in practice. Thus in connection with the nut 64 shown in Figs. 8 and 9 the clamping means are constituted by the threads of the bolt on which the nut is screwed, and in connection with the washer 112 shown in Figs. 19 to 21 by a bolt head or a nut. Also for compression of fixing members of this invention serving for clamping of driving elements to a shaft nuts may be used as clamping means, for example flanged nuts, or other elements able to exert a pressure on the middle portion 12 of the fixing member or on the inner border of the main portion 10, which clamping means may otherwise be independent of the fixing member itself.

**Claims**

1. A fixing member adapted to be clamped to a shaft-like element, and comprising a dished disc (10 or 10, 12) provided with a centre opening (14), which is to conform to the shaft-like element, and with a substantial conical main portion (10) intended to be axially supported at its outer circumference by a counter member 36, 52 or 120, said main portion (10) being provided at its boundary (16 or 22) nearest to the centre opening (14) with contact areas adapted to be influenced by clamping means (44, 58 and 114, 118) and thereby axially to be pressed in direction of a radial plane (40) to the outer circumference of the main portion (10), characterized in that the portion (10 or 12) of the disc (10 or 10, 12) bordering the centre opening (14) is provided with folds (18) so that the portion at the disc defining the centre opening (14) has a zig-zag or wave-like shape, the folds (18) being shaped to leave between them flat unfolded disc portions, at a position spaced from the centre opening, whereas said contact areas being arranged at said unfolded disc portions.

2. A fixing member according to claim 1, characterized in that each fold (18) is substantially V-shaped, in cross-section, and that the sides (20), of each fold converge in a direction away from the centre opening (14).

3. A fixing member according to claim 2 comprising a middle portion (12) surrounding the centre opening (14) and having a smaller conicity than the main portion (10), characterized in that the folds (18) extend substantially radially over the middle portion (12) until the transition (22) between the latter and the main portion (12), which main portion is provided opposite to each fold with an opening (48) extending outwards from said transition (22).

4. A fixing member according to claim 3, characterized in that the outwardly extending sides of each opening (48) converge in a direction away from the center opening (14).

5. A fixing member according to claim 1 comprising an outer edge identical with the outer edge of the main portion (10) and shaped to conform to the centre opening (14) and provided with a main portion (10) extending between the centre opening (14) and the said outer edge, characterized in that each fold (18) is substantially V-shaped in cross-section and extends from the centre opening (14) to the outer edge of the main portion, and that the side edges of each fold (18) are either parallel or converge in direction away from the centre opening (14).

6. A fixing member according to claim 1 or claim 2 wherein the center opening (14) is circular, and wherein the inner border (16) of the main portion (10) is at the edge (16) of the centre opening (14), characterized in that the edge surface (16) of the centre opening (14) is threaded.

7. A fixing member according to claim 6, characterized in that the outer edge (74) of the main portion (10) is polygonal in shape.

8. A fixing member according to any one of the claims 1 to 5, characterized in that its rear face is so shaped in relation to its front face that two uniform fixing members (98 or 100) can be brought into mutual engagement at least along the outer and the inner edges (90 and 96 respectively) of the main portion (10).

9. A fixing member according to any of the preceding claims, characterized in that the main portion (10) has a thickness decreasing in a direction away from the centre opening (14).

10. A fixing member according to any of the preceding claims, characterized in that the main portion (10) is provided with notches (108) along its free outer edge.

**Patentansprüche**

1. Spannelement zum Anklemmen an einem schaftähnlichen Element einschliessend einer schalenförmigen Ringscheibe (10 oder 10, 12) mit einer Zentralöffnung (14), die mit dem schaftähnlichen Element gleichförmig ist, sowie mit einem etwa konischen Hauptabschnitt (10), der mit seinem Aussenrand an einem Gegenelement (36, 52 oder 120) axial festlegbar ist, wobei der Hauptabschnitt (10) an seiner der Hauptöffnung (14) zunächstliegenden Begrenzung (16 oder 22) Eingriffbereiche aufweisst, die von Klemmeinrichtungen (44, 58 und 114, 118) beeinflusst werden können um axial in Richtung gegen einer radialen Ebene (40) zum Aussenrand des Hauptabschnittes (10) zu gepresst werden, dadurch gekennzeichnet, dass der der Zentralöffnung (14) angrenzenden Abschnitt (10 oder 12) der Ringscheibe (10 oder 10, 12) derart mit Falten (18) versehen ist, dass der die Zentralöffnung (14) abgrenzende Teil der Ringscheibe zickzack- oder wellenförmig ist, wobei die Falten (18) derart ausgebildet sind, dass flache ungefaltete Ringscheibenabschnitte in einem Abstand von der Zentralöffnung (14) entstehen, wo an welchen ungefaltenenen Ringscheibenabschnitten die Eingriffbereiche sich befinden.

2. Spannelement nach Anspruch 1, dadurch gekennzeichnet, dass im Querschnitt jede Falte (18) hauptsächlich V-förmig ist, und dass die Seiten (20) jeder Falte in Richtung von der Zentralöffnung (14) weg konvergieren.

3. Spannelement nach Anspruch 2, und mit einem die Zentralöffnung (12) umgebenden und eine geringere Konizität als der Hauptabschnitt (10) aufweisenden Mittelbereich (12), dadurch gekennzeichnet, dass die Falten (18) etwa radial über den Mittelbereich (12) bis zum Übergang (22) zwischen diesem und dem Hauptabschnitt (10) verlaufen, wo der Hauptabschnitt jeder Falte gegenüber mit einer Öffnung (48), die such von dem Übergang (22) nach aussen erstreckt, versehen ist.

4. Spannelement nach Anspruch 3, dadurch gekennzeichnet, dass die nach aussen verlaufenden Seiten jeder Öffnung (48) in Richtung von der Zentralöffnung (14) weg konvergieren.

5. Spannelement nach Anspruch 1 mit einer Aussenkante, die mit der Aussenkante des Hauptabschnittes (10) identisch und zu der Zentralöffnung (14) konform ist, und bei der sich der Hauptabschnitt (10) zwischen der Zentralöffnung (14) und der obigen Aussenkante erstreckt, dadurch gekennzeichnet, dass im Querschnitt jede Falte (18) etwa V-förmig ist und sich von der Zentralöffnung (14) zu der Aussenkante des Hauptabschnittes erstreckt, und dass die Seitenkanten jeder Falte (18) entweder parallel sind oder in Richtung von der Zentralöffnung (14) weg konvergieren.

6. Spannelement nach Anspruch 1 oder Anspruch 2, wo die Zentralöffnung (14) kreisförmig ist und wo die innere Grenze (16) des Hauptabschnittes (10) an den Kante (16) der Zentralöffnung (14) liegt, dadurch gekennzeichnet, dass die Kantenoberfläche (16) der Zentralöffnung (14) ein Gewinde aufweist.

7. Spannelement nach Anspruch 6, dadurch gekennzeichnet, dass die Aussenkante (74) des Hauptabschnittes (10) vieleckig ist.

8. Spannelement nach einem oder mehreren der vorhergehenden der Ansprüche 1 bis 5, dadurch gekennzeichnet, dass seine Rückseite im Verhältnis zu seiner Vorderseite eine derartige Form aufweist, dass zwei gleichförmige Spannelemente (98 oder 100) zumindest längs der Aussen- und Innenkante (90 bzw. 96) des Hauptabschnittes (10) in gegenseitigem Eingriff gebracht werden können.

9. Spannelement nach einem oder mehreren der vorhergehenden Ansprüche, dadurch gekennzeichnet, dass der Hauptabschnitt (10) eine von der Zentralöffnung (14) weg abnehmende Dicke aufweist.

10. Spannelement nach einer der vorhergehenden Ansprüche, dadurch gekennzeichnet, dass der Hauptabschnitt (10) längs seiner freien Aussenkante Kerben (108) aufweist.

**Revendications**

1. Un organe de fixation adapté à être serré sur un élément en forme d'arbre, comprenant un disque en cuvette (10 ou 10, 12) muni d'une ouverture centrale (14) qui se conforme à l'élément en forme d'arbre, et une partie principale sensiblement conique (10) prévue pour être supportée axialement au niveau de sa circonférence par un contre-organe (36, 52 ou 120), ladite partie principale (10) étant munie sur son bord (16 ou 22) qui est le plus proche de l'ouverture centrale (14) de régions de contact aptes à être influencées par les moyens de serrage (44, 58 et 114, 118) et à être ainsi pressées axialement en direction d'un plan radial (40) sur la circonférence extérieure de la partie principale (10), caractérisé en ce que la partie (10 ou 12) du disque (10 ou 10, 12) bordant l'ouverture centrale (14) est munie de plis (18) de sorte que la partie du disque définissant l'ouverture centrale (14) présente une forme en zigzag ou undulée, les plis (18) étant conformés de manière à ménager entre eux des parties de disque plates et non pliées, dans une position espacée de l'ouverture centrale, alors que lesdites régions de contact sont aménagées dans lesdites parties non pliées du disque.

2. Un organe de fixation selon la revendication 1, caractérisé en ce que chaque pli (18) a sensiblement la forme d'un V en section transversale et en ce que les côtés (20) de chaque pli convergent dans une direction allant en s'éloignant de l'ouverture centrale (14).

3. Un organe de fixation selon la revendication 2, comprenant une partie médiane (12) entourant l'ouverture central (14) et présentant une conicité plus réduire que la partie principale (10), caractérisé en ce que les plis (18) s'étendent sensiblement radialement sur la partie médiane (12) jusqu'à la région de transition (22) entre cette dernière et la partie principale (12), la partie principale étant munie à l'opposé de chaque pli d'une ouverture (48) s'étendant vers l'extérieur à partir de ladite région de transition (22).

4. Un organe de fixation selon la revendication 3, caractérisé en ce que les côtés de chaque ouverture (48) qui s'étendent vers l'extérieur convergent dan une direction allant en s'éloignant de l'ouverture centrale (14).

5. Un organe de fixation selon la revendication 1, comprenant un bord extérieur identique au bord extérieur de la partie principale (10) et conformé de manière à s'adapter à l'ouverture central (14) muni d'une partie principale (10) s'étendant entre l'ouverture centrale (14) et le dit bord extérieur, caractérisé en ce que chaque pli (18) a sensiblement une forme en section transversale en V et s'étend depuis l'ouverture centrale (14) jusqu'au bord extérieur de la partie principale, et en ce que lesdits bords de chaque pli (18) sont soit parallèles soit convergeants dans une direction allant en s'éloignant de l'ouverture centrale (14).

6. Un organe de fixation selon la revendication 1 ou 2, dans lequel l'ouverture centrale (14) est circulaire, et dans lequel le bord interne (16) de la partie principale (10) est situé sur le bord (16) de l'ouverture centrale (14), caractérisé en ce que la surface de bord (16) de l'ouverture centrale (14) est filetée.

7. Un organe de fixation selon la revendication 6, caractérisé en ce que le bord extérieur (74) de la partie principale (10) est de forme polygonale.

8. Un organe de fixation selon l'une quelconque des revendications 1 à 5, caractérisé en ce que sa face arrière est conformée, par rapport à sa face avant, de manière que deux organes de fixation (98 ou 100) puissent être amenés en contact mutuel au moins le long des bords extérieurs et intérieurs (90 et 96 respectivement) de la partie principale (10).

9. Un organe de fixation selon l'une quelconque des revendications précédentes, caractérisé en ce que la partie principale (10) a une épaisseur qui va en diminuant dans une direction s'éloignant de l'ouverture centrale (14).

10. Un organe de fixation selon l'une quelconque des revendications précédentes, caractérisé en ce que la partie principale (10) présente des encoches (108) le long de son bord extérieur libre.

Fig. 1.

Fig. 2.

Fig. 3.

Fig. 4.

Fig. 5.

Fig. 6.

Fig. 7.

*Fig.8.*

*Fig.9.*

*Fig.11.*

*Fig.10.*

*Fig.12.*

0 056 026

Fig. 13.

Fig. 14.

Fig. 15.

Fig. 16.

4

# Fig. 17.

# Fig. 18.

# Fig. 19.

# Fig. 21.

# Fig. 20.